(19) Europäisches Patentamt
European Patent Office
Office européen des brevets

(11) **EP 3 309 461 B1**

(12) **EUROPÄISCHE PATENTSCHRIFT**

(45) Veröffentlichungstag und Bekanntmachung des Hinweises auf die Patenterteilung:
**14.10.2020 Patentblatt 2020/42**

(51) Int Cl.:
*G02B 27/02* (2006.01)  *F24C 7/08* (2006.01)
*F24C 15/10* (2006.01)  *G09F 9/33* (2006.01)
*H05B 3/74* (2006.01)  *H05B 6/12* (2006.01)
*G02B 5/20* (2006.01)

(21) Anmeldenummer: **17205811.7**

(22) Anmeldetag: **02.12.2011**

(54) **ANZEIGEVORRICHTUNG, INSBESONDERE FÜR KOCHFLÄCHEN**

DISPLAY DEVICE, PARTICULARLY FOR COOKTOPS

DISPOSITIF D'AFFICHAGE, EN PARTICULIER POUR SURFACES DE CUISSON

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.12.2010 DE 102010061122**
**06.06.2011 DE 102011050873**

(43) Veröffentlichungstag der Anmeldung:
**18.04.2018 Patentblatt 2018/16**

(62) Dokumentnummer(n) der früheren Anmeldung(en) nach Art. 76 EPÜ:
**11799387.3 / 2 609 373**

(73) Patentinhaber: **Schott AG**
**55122 Mainz (DE)**

(72) Erfinder:
• **WEISS, Evelin**
**55131 Mainz (DE)**
• **OHL, Gerold**
**55286 Sulzheim (DE)**
• **ZENKER, Thomas**
**55268 Nieder-Olm (DE)**
• **TAPLAN, Martin**
**55120 Mainz (DE)**

(74) Vertreter: **Herrmann, Jochen**
**Patentanwalt**
**European Patent Attorney**
**Königstrasse 30**
**70173 Stuttgart (DE)**

(56) Entgegenhaltungen:
**EP-A1- 1 250 028  EP-A2- 1 465 460**
**DE-A1-102008 012 602  DE-A1-102008 050 263**
**DE-U1- 20 019 210  US-A1- 2007 108 184**
**US-A1- 2008 264 931**

**Beschreibung**

Zur Verbesserung der Benutzerführung sind die Kochflächen moderner Glaskeramikkochgeräte mit Signallampen oder 7-Segment-Anzeigen ausgerüstet. Die Kochfläche selbst besteht dabei aus einer transparenten, eingefärbten Glaskeramikscheibe (Substrat), die in Aufsicht schwarz erscheint. Die Signallampen geben dem Benutzer Informationen über den Ein-Zustand des Kochgerätes beziehungsweise einzelner Kochzonen, der Reglerstellung und auch ob die Kochzone nach dem Ausschalten noch heiß ist. Als Leuchtmittel werden üblicherweise LED-Lämpchen eingesetzt.

Aufgrund der Einfärbung der Glaskeramikkochfläche und der sehr begrenzten Auswahl farbiger LED-Anzeigen, ist das zur Verfügung stehende Farbspektrum für die Benutzerinformation sehr stark eingeschränkt. Standardmäßig sind diese Anzeigen rot oder ggf. orange, was sich auch aufgrund der Einfärbung der Glaskeramikkochfläche ergibt. In der DE 10 2008 050 263 wird der Transmissionsverlauf für eine Glaskeramikkochfläche beschrieben, die insbesondere auch eine Durchlässigkeit für blaues Licht bei ca. 450 nm zulässt und damit eine erweiterte farbliche Anzeigefähigkeit erlaubt. Auf der Basis dieser Glaskeramik sind unterschiedliche Anzeigemöglichkeiten denkbar. Durch die Erweiterung des Transmissionsspektrums auch auf den blauen Wellenlängenbereich ist zwar die Farbgebung der Anzeigen erweitert worden. Aufgrund der geringen Anzahl verschiedenfarbiger LED-Anzeigen ist jedoch auch bei dieser GlaskeramicKochfläche die Anzahl der für den Benutzer sichtbaren Farben stark eingeschränkt. Eine weiße LED würde beispielsweise aufgrund des Transmissionsverlaufes der Kochfläche für den Benutzer mit einem Gelbstich wahrgenommen.

EP 2 223 900 (Abbildung 1) beschreibt eine Anzeigevorrichtung mit einer farblosen oder leicht eingefärbten Glaskeramik und einer farblichen Beschichtung zwischen dem Leuchtmittel und der Glaskeramik. Damit wird die Transmission und der Farbeindruck der Glaskeramik unabhängig von den übrigen Bereichen der Glaskeramik eingestellt.

US 2007/108184 offenbart spektrale Transmissionen von Glaskeramiken, die über Pigmente oder einen Filter erzeugt werden.

Es ist Aufgabe der Erfindung eine Anzeigevorrichtung der eingangs erwähnten Art bereitzustellen, mit der auf der Glaskeramikvorderseite für den Benutzer beliebige und vorher bestimmbare Farbeindrücke von Signallämpchen oder Anzeigeeinheiten in einfacher, preiswerter und robuster Ausführung verwirklich werden können.

Die Aufgabe wird in überraschend einfacher Weise durch die Merkmale des Anspruchs 1 gelöst.

Vorteilhafte Ausgestaltungsvarianten der Erfindung sind in den Unteransprüchen beschrieben.

Die Erfindung wird nachfolgend unter Bezugnahme auf die Tabellen und Abbildungen näher erläutert. Es zeigen:

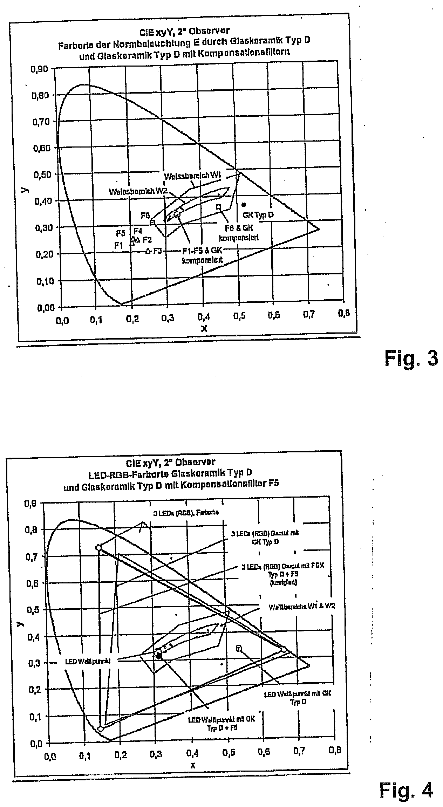

Tabelle 1    die Eckkoordinaten von Feldern im CIE-Normenvalenzsystem CIE xyY, dargestellt in Figur 3;

Tabelle 2    die Eckkoordinaten weiterer Felder im CIE-Normenvalenzsystem;

Figur 1    typische Transmissionsspektren verschiedener Glaskeramiken für Kochflächen, dargestellt in Figur 2;

Figur 2    die Darstellung von Farborten der Normbeleuchtung E durch verschiedene Glaskeramiken im CIE-Normenvalenzsystem;

Figur 3    die Darstellung von Farborten der Normbeleuchtung E durch eine bestimmte Glaskeramik D mit und ohne Kompensationsfilter im CIE-Normenvalenzsystem zur Weißkompensation;

Figur 4    die Darstellung von Farborten eines LED-RGB (RGB-Gamut) Leuchtmittels durch eine bestimmte Glaskeramik D mit und ohne Kompensationsfilter im CIE-Normenvalenzsystem;

Figur 5    die Darstellung von Transmissionsverläufen von Kompensationsfiltern $F_1$ bis $F_6$ optimiert zur Kompensation der Normlichtquelle E und der Glaskeramik D;

Figur 6    den y-Tristimulus und die Y-Werte der Filter $F_1$ bis $F_6$ gemäß Figur 6;

Figur 7    Farborte einer blauen und einer weißen LED mit Blaufilter direkt betrachtet und durch eine Glaskeramik, vom Typ Ceran Higtrans ® eco betrachtet und

Figur 8    Helligkeitsspektren der blauen und weißen LED gemäß Figur 7 durch Ceran Higtrans ® eco.

Die Gesamttransmission des Substrates $\tau_{ges}(\lambda)$ setzt sich aus den Transmissionen der Glaskeramik $\tau_{GK}(\lambda)$ und des Kompensationsfilters $\tau_{KF}(\lambda)$ zusammen (Gl. 1). Die Intensitätsverteilung $i_{LE}(\lambda)$ des Leuchtelementes wird durch das Gesamttransmissionsspektrum $\tau_{ges}(\lambda)$ zu der Intensitätsverteilung $i_A(\lambda)$ der Anzeige verschoben (Gl. 2), die ein

Beobachter auf der Anzeigenseite wahrnimmt (GI. 2).

$$\text{GI. 1} \qquad \tau_{\text{ges}}(\lambda) = \tau_{KF}(\lambda) \cdot \tau_A(\lambda)$$

$$\text{GI. 2} \qquad i_A(\lambda) = \tau_{ges}(\lambda) \cdot i_{LE}(\lambda)$$

Die einhergehende Verschiebung des Farbortes lässt sich im CIE-Normenvalenzsystem CIExyY (CIE - Commision internationale de l'éclaireage) darstellen. (Für die nachfolgende Beschreibung und deren Beispiele wird in dieser Schrift die Version CIExyY 1931 mit einem 2° Beobachter verwendet.) Das menschliche Auge ist kein spektral kontinuierlicher Lichtsensor, sondern ist aus Farbrezeptoren für begrenzte rote, grüne und blaue Spektralbereiche aufgebaut. Dem entsprechend ist das Sinnesempfinden der L, M, K Zapfen, mit Empfindlichkeiten im roten, grünen und blauen Lichtspektrum. Aufgrund von Testreihen mit Testpersonen wurden im CIE-Formalismus Tristimulusfunktionen $\overline{x}, \overline{y}, \overline{z}$ und deren Integrale $X, Y, Z$ definiert, die als ein Triplett von künstlichen Primärfarben durch deren Kombination den gesamten empfindbaren Farbraum unserer Augen nachbilden können. Dabei entsprechen die $\overline{x}$ und $\overline{z}$ Funktionen nur angenähert der L- und K-Zapfenempfindlichkeit. Die $\overline{y}$ Funktion ist so konstruiert, dass sie das Helligkeitsempfinden bei Tag nachbildet und entspricht nahezu der M-Zapfenempfindlichkeit. Mit GI. 3 und GI. 4 ist der empfundene Farbort hierbei durch die normierten Werte x und y eindeutig beschrieben, $Y$ ist ein Maß für die Helligkeit. Der CIExyY Formalismus beschreibt Selbstleuchter, optional durch absorbierende Medien hindurchleuchtend, deren in das Auge fallende Lichtspektrum in die normierten X. Y, Z CIE-Koordinaten transformiert wird, die dann den Farbort und die Helligkeit des Selbstleuchters beschrieben.

$$\text{GI. 3} \qquad A = \frac{1}{N} \int \overline{a}(\lambda) \cdot \tau(\lambda) \cdot i(\lambda) \cdot d\lambda \text{ mit } A = X, Y, Z \text{ und } \overline{a} = \overline{x}, \overline{y}, \overline{z}$$

$$\text{mit } N = \int \overline{y}(\lambda) \cdot i(\lambda) \cdot d\lambda$$

$$\text{GI. 4} \qquad x = \frac{X}{S}, \quad y = \frac{Y}{S}, \quad z = 1 - x - y \text{ mit } S = X + Y + Z$$

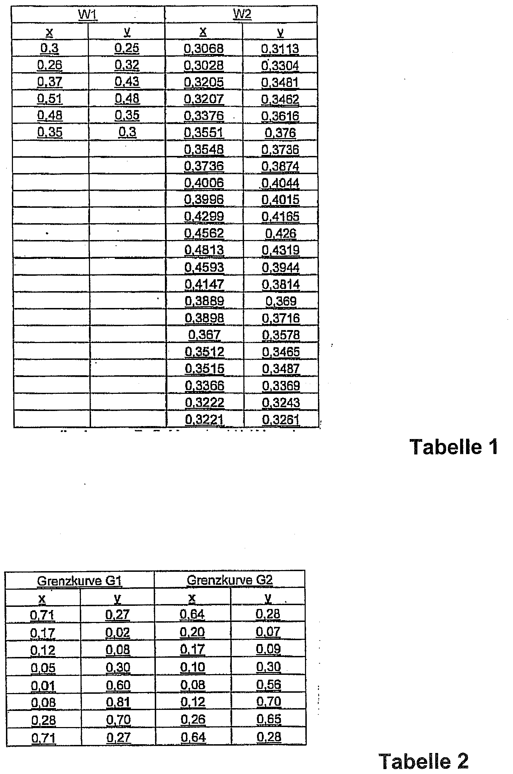

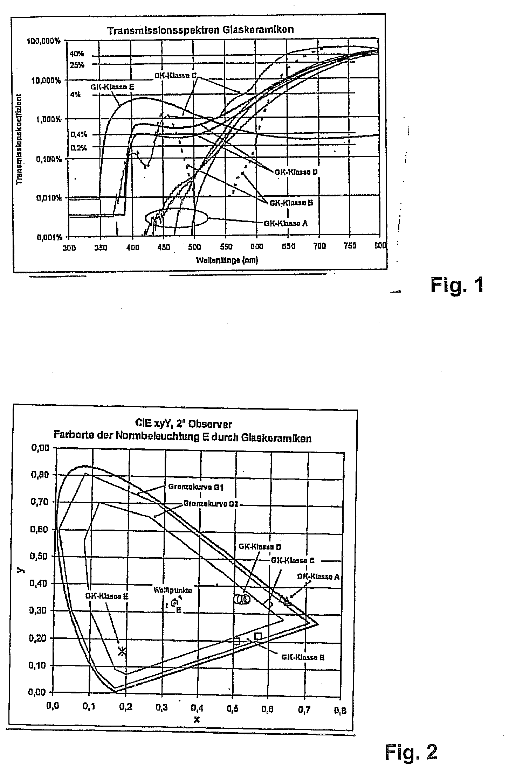

Voraussetzung zur Erreichung eines gewünschten Anzeigefarbortes im roten bis blauen Spektralbereich für einen Beobachter mittels eines Kompensationsfilters und mittels vorzugsweise eines kommerziell üblichen und kostenverträglichen Anzeigenleuchtelementes sind minimale Transmissionswerte des Substrates im Spektralbereich aller drei L, M, K Zapfen, beziehungsweise aller drei $\overline{x}, \overline{y}, \overline{z}$ CIE-Primärspektren. In Figur 1 sind typische Transmissionsspektren durch verschiedene Glaskeramiktypen (Klassen) dargestellt. Hierbei handelt es sich um die derzeit am weitesten verbreiteten mit Vanadium (V) eingefärbte Glaskeramiken Typ A (beispielsweise CERAN SUPREMA ®, CERAN HIGHTRANS ®, KeraBlack®), um Glaskeramiken mit Einfärbung durch Co, Fe, Ni (Typ B, beispielsweise CERAN COLOR ®), durch V, As und Fe (Typ C, China), durch V, Fe (Typ D, beispielsweise CERAN HIGHTRANS eco ®, wie sie in der DE 10 2008 050 263 beschrieben ist. Die Zusammensetzung dieser Glaskeramik wird durch Bezugnahme zum Offenbarungsgehalt der vorliegenden Schrift gemacht. Und solche durch Einfärbung mit $Ti^{3+}$ mittels reduzierender Läuterung (beispielsweise ZnS-Läuterung), dem Typ E.

Um mit handelsüblichen Leuchtmitteln (beispielsweise LEDs) durch die Glaskeramik hindurch auf der von der Glaskeramikvorderseite gebildeten Anzeigenseite genügend helle Farbeindrücke im blauen bis roten Spektralbereich hervorzurufen, sind Glaskeramiken erforderlich, die eine mittlere Transmission von >0,2%, vorzugsweise von >0,4%, jeweils für jeden der Spektralbereich von 420-500nm, 500-620nm und 550-640nm aufweisen. Wie in Figur 1 nachzuvollziehen ist, erfüllen diese Bedingung die neueren Glaskeramikklassen D und E, mit Einschränkungen auch Klasse C. Die bisherige, weit verbreitete; Glaskeramikklasse A erfüllt diese Bedingung nicht. Mit dieser Glaskeramik sind auch erfindungsgemäße Farbortverschiebungen über den gesamten sichtbaren Spektralbereich mit üblichen Leuchtmitteln und Filtern unmöglich, insbesondere auch keine Weißkompensation. Andererseits darf auch die spektrale Transmission nicht zu hoch sein, um ohne zusätzliche Hilfsmittel, wie lichtdichte Unterseitenbeschichtungen, ein Einblick in den Innenaufbau der Kochfelder zu verwehren und eine ästhetisch bevorzugte, farbig gleichförmige, nicht transparente Kochfläche darzustellen. Diese maximale Transmission des Glaskeramikkörpers wird vorliegend mit <40%, vorzugsweise <25% bei 400nm bis 700nm, definiert und zusätzlich im Mittel von <4% zwischen 450-600nm. Wie in Figur 1 nachzuvollziehen ist, erfüllen diese zweite Bedingung alle aufgezeigten Glaskeramikklassen außer der Klasse C, die in der Praxis zu transparent erscheint, um einen Einblick in das Innenleben eines Kochfeldes zu verhindern. Eine weitere, dritte Bedingung ergibt sich aus der Machbarkeit einer Farbverschiebung zu einem weißen Farbeindruck eines handelsüblichen Leuchtmittels durch eine Glaskeramikkochfläche und eines nicht zu aufwendigen Kompensationsfilters. Hierzu dürfen die Transmissionsunterschiede in den drei spektralen Sinnesbereichen nicht zu groß sein. Dies wird in Figur 3 dargestellt. Die Farborte der Normbeleuchtung durch erfindungsgemäße Glaskeramiken sollten innerhalb einer Grenzkurve G1, vorzugsweise einer Grenzkurve G2 liegen. Die Eckkoordinaten zu den Grenzkurven G1 und G2 sind in Tabelle 2 aufgelistet.

Nimmt ein Beobachter ein Lichtreiz wahr, der aus zwei Lichtsignalen besteht, die räumlich nebeneinander liegen, aber mit dem Auge räumlich nicht auflösbar erscheinen, und die durch die Intensitätsverteilung der Leuchtelemente und durch Filtertransmissionen beschrieben sind, so addiert sich der wahrgenommenen Sinnesreiz linear (Gl. 5), und der summarische Farbort $(x,y)$ liegt im Chromatizitätsdiagramm CIExyY auf einer Geraden zwischen den Farborten $(x_1,y_1)$ und $(x_2,y_2)$, der zwei Lichtsignale (Gl. 6). Im speziellen Fall gleicher Intensitäten (Gl. 7) liegt $(x,y)$ in der Mitte zwischen den Farborten der beiden Lichtsignale (Gl. 8).

$$\text{Gl. 5} \qquad A = \frac{1}{N} \int \overline{a}(\lambda) \cdot \left( \tau_1(\lambda) \cdot i_1(\lambda) + \tau_2(\lambda) \cdot i_2(\lambda) \right) \cdot d\lambda = A_1(\tau_1, k_1 i) + A_1(\tau_2, k_2 i)$$

$$\text{mit } i_1 = k_1 \cdot i \quad , \quad i_2 = k_2 \cdot i \quad , \quad k_1 + k_2 = 1$$

$$\text{Gl. 6} \qquad x = k_1 x_1 + k_2 x_2$$

$$\text{mit } x_i = f(\tau_i, i)$$

, y,z entsprechend.

$$\text{Gl. 7} \qquad k_1 = k_2 = \frac{1}{2}$$

$$\text{Gl. 8} \qquad x = \frac{x_1 + x_2}{2}, \quad y = \frac{y_1 + y_2}{2}, \quad z = \frac{z_1 + z_2}{2} = 1 - x - y \ .$$

Dieser lineare Zusammenhang ist auch bekannt aus Farbdiagrammen zum Beispiel zu Bildanzeigen, wie CRT oder LCD Monitoren, bei denen mögliche wahrnehmbare Farborte im CIExyY Diagramm in einem Dreieck zwischen den Farborten der drei Primärfarben des Anzeigegerätes liegen, i.a. ein RGB-Farbraum, oder in einem Farbpolygon bei mehr als drei Primärfarben. Hierbei berechnet sich der Farbort aus der linearen Kombination dreier oder mehrerer Primärintensitäten gemäß (Gl. 6).

In der erfindungsgemäßen Anwendung zweier hintereinander angeordneter Filter, eines Substrates (beispielsweise Glaskeramik) und eines Kompensationsfilters ist der Zusammenhang nicht mehr linear gegeben wie Gl. 9 im Vergleich zu Gl. 5 verdeutlicht. In Gl. 9 können für $\tau_1(\lambda)$ und $\tau_2(\lambda)$ zum Beispiel aus Gl. 1 die Transmissionsspektren der Glaskeramik $\tau_{GK}(\lambda)$ und des Kompensationsfilters $\tau_{KF}(\lambda)$ eingesetzt werden.

$$\text{Gl. 9} \qquad A_{12} = \frac{1}{N} \int \overline{a}(\lambda) \cdot \tau_1(\lambda) \cdot \tau_2(\lambda) \cdot i(\lambda) \cdot d\lambda$$

Der Farbort des Leuchtelementes durch die hintereinander angeordneten Filter liegt nicht mehr notwendigerweise auf einer Geraden zwischen den Farborten des Leuchtelementes durch die einzelnen Filter. Umgekehrt führt dies zu dem Phänomen, dass derselbe gemeinsame, erfindungsgemäß kompensierte Farbort eines Leuchtelementes durch eine Glaskeramik mit verschiedenen Kompensationsfiltern erreicht werden kann, wobei der Farbort des Leuchtelementes durch die einzelnen Kompensationsfilter je nach spektraler Verteilung nicht identisch sein muss. In Figur 3 sind die Farborte des Normlichtes E einzeln durch eine Glaskeramik vom Typ D und einzeln durch verschiedene Kompensationsfilter F1 - F5, die jeweils in Kombination mit der Glaskeramik hintereinander angeordnet das Normlicht an demselben Gesamtfarbort erscheinen lassen. In dem gezeigten Beispiel sind die Farbfilter so konstruiert, dass der Gesamtfarbort für den Beobachter am Unbuntpunkt E (Grau- oder Weißpunkt E) liegt.

Mit einem erfindungsgemäßen Farbfilter ist es, wie beschrieben, somit möglich die Verschiebung des ursprünglichen Farbortes des Leuchtmittels durch das eingefärbte Substrat wieder zu kompensieren, im speziellen zu einem weißen Farbort. Eine weitere erfindungsgemäße Anwendung ist, den Farbort des Leuchtmittels auf der Anzeigenseite des Substrates zu einem gewünschten Farbort zu verschieben, der verschieden zum ursprünglichen Farbort des Leuchtmittels ist. Die kombinierte Verschiebung des Farbortes durch das Substrat und den Filter kompensiert sich hierbei gewollt nicht. Hiermit kann man zum einen Farborte erzeugen die beispielsweise durch verfügbare, feste Wellenlängen handelsüblicher LEDs nicht dargestellt werden können, beispielsweise ein Farbort der zwischen dem einer gelben und orangen LED liegt. Dies ist zum Beispiel für die Identifizierung, Differenzierung und Vermarktung von Produktlinien vorteilhaft. Zum anderen können Leuchtelement einheitlich und damit mit Kostenvorteil mit einer Sorte nichtmonochromatischer, sondern spektral breit emittierender, farbiger Leuchtmittel aufgebaut sein (beispielsweise weiße LEDs, Leuchtstoffröhren). Durch Anwendung verschiedener erfindungsgemäßer Farbfilter lassen sich verschiedene Farborte für verschiedene Produktlinien oder gleiche Farborte einer Produktlinie kombiniert mit verschieden eingefärbten Substraten erzeugen. Farbortverschiebungen und Kompensationen sind insbesondere für spektral breitbandige Leuchtmittel anwendbar, wie weiße LEDs, Leuchtstoffröhren oder Mischfarben von kombinierten einfarbigen LEDs, beispielsweise RGB-LEDs. Einfarbige, nahezu monochromatische Leuchtmittel, beispielsweise wie rote, blaue, grüne LEDs, erfahren als Einzelfarbe eingesetzt im Allgemeinen keine merkliche Farbortverschiebung durch Filter.

Erfindungsgemäß den Farbort eines Leuchtmittels zu Weiß zu kompensieren, heißt nicht, genau den Unbuntpunkt E zu treffen. Stattdessen toleriert das Auge einen weiten Farbortbereich als Weißeindruck. Dies hängt unter anderem auch von den Farborten der umgebenden Oberflächen ab, wie einer rot-schwarzen Kochfeldoberfläche. So wird der Farbort der Normlichtquelle E, durch einen Filter F6 und der Glaskeramik Typ D (siehe Figur 3) im Umfeld der Kochfläche durchaus noch als Weiß empfunden, obwohl dieser im direkten Vergleich mit dem Farbort E schon als deutlich rötlich wahrgenommen wird. Ziel ist es daher, erfindungsgemäß zur Weiß-Kompensationen eines beliebigen Leuchtelementes einen Farbort zu erreichen, der in den Grenzen des Weißbereiches W1, vorzugsweise des Weißbereiches W2 liegt. Der Weißbereich W2 umschließt hierbei die im ANSI definierte Weißfelder (ANSI binning) 1A, ..., 1D, ..., 8D, die typischerweise von LED-Herstellern herangezogen werden, um die Farborte ihrer weißen LEDs zu charakterisieren. Dieser Bereich entspricht Farbtemperaturen von 2580K bis 7040K (CCT, color correlated temperature), entsprechend einem Weißeindruck von Kaltweiß bis Warmweiß. Die Eckpunkte der erfindungsgemäß definierten Weißbereiche W1 und W2 in Figur 3 sind in Tabelle 1 aufgelistet.

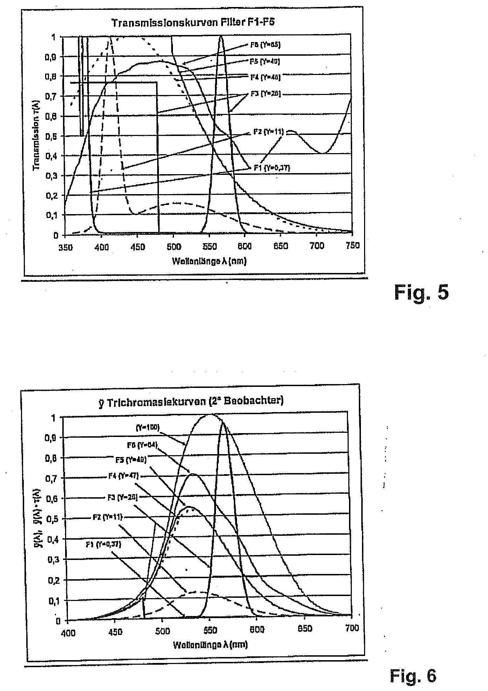

Erfindungsgemäß ist die Farbortkompensation nicht auf die Beispielfilter F1-F5 gemäß Figur 5 oder die Normlichtquelle E beschränkt. Vorzugsweise werden in einer Anwendung kommerziell erhältliche und kostengünstige Leuchtmittel, zum Beispiel weiße LEDs eingesetzt werden. Auch andersfarbige, nicht monochromatische Leuchtmittel, wie beispielsweise Leuchtstoffröhren oder weiterhin beispielsweise eine Kombination aus blauen, grünen und roten LEDs (RGB-Leuchtmittel), die beispielsweise als Hinterleuchtung von LCD-Anzeigen auf einen festen Farbort eingestellt sind oder eine Farbdarstellung der Anzeige steuern, können eingesetzt werden, um mittels entsprechend aufgebauter Kompensationsfiltern auf der Anzeigenseite des Kochfeldes zu den ursprünglichen Farbort der Leuchtmittel zu kompensieren oder speziell einen weißen Farbeindruck oder auch einen beliebigen Farbeindruck zu erzeugen.

Ein Beispiel einer Korrektur eines RGB-Leuchtmittels ist Figur 4 dargestellt. Ein RGB-Leuchtmittel spannt im CIExyY Farbraum einen darstellbaren, dreieckigen Farbraum (Gamut) zwischen den LED Farborten auf. Durch eine Glaskeramik Typ D betrachtet verschiebt sich dieses Gamut zum Roten hin, durch den zusätzlichen Filter F5 wird das Gamut wieder nahezu deckungsgleich auf das ursprüngliche Gamut zwischen den LEDs (ohne Glaskeramik und Kompensationsfilter) zurückverschoben. Entsprechend verschiebt sich der eingestellte Weißpunkt des RGB-Leuchtmittels (hier beispielsweise Normlicht D65) durch die Glaskeramik betrachtet zum Roten hin und wird mittels Filter F5 wieder nahezu deckungsgleich auf den ursprünglichen Ort zurückverschoben. Diese Korrektur des Weißpunktes ist hier nicht exakt, da der Filter F5 auf das Normlicht E optimiert wurde und zum anderen spielen Nichtlinearitäten mit den Spektren der LEDs ein Rolle (vgl. Gl. 9).

Generell vorteilhaft sind Filter mit hoher Helligkeit des hindurchtretenden Lichtes. Da der Helligkeitseindruck des menschlichen Auges mit dem grünen Spektrum beziehungsweise der grünen Tristimulusfunktion skaliert, sind solche Filter erfindungsgemäß bevorzugt, die eine möglichst hohe Transmission im grünen Spektralbereich aufweisen. Dies zeigt sich dadurch, dass mit einer Lichtquelle (Y=100) die Helligkeit dieser bei Transmission durch den Filter nahe an Y=100 heranreicht.

Es zeigt sich, dass die diskutierten Filter F1-F6 zur Farbortkompensation der Normlichtquelle E unter einer Glaskeramik Typ D, die unterhalb einer grünen Wellenlänge nahezu gleichförmig transmittieren (Hochpass-Frequenzfilter), zum Beispiel Filter F4-F6 in Figur 5, gegenüber solchen in dem Helligkeitseindruck im Vorteil sind, die nur gezielt eine hohe Transmission in begrenzten blauen und grünen Spektralbereich aufweisen, zum Beispiel Filter F1-F3 in Figur 5. Speziell für Weißpunktkompensationen unter Glaskeramiken Typ D von weißen Leuchtmitteln sind erfindungsgemäße Kompensationsfilter mit Y>10 (bezogen auf Normlicht E), vorzugsweise von Y>40 (bezogen auf Normlicht E) vorteilhaft. Die integrativen Y-Werte der Filter F1-F6 sind in Figur 6 unter der grünen Tristimulusfunktion dargestellt.

Diese Regel, das heißt eine hohe Transmission im Grünen, gilt generell für Kombination von beliebigen Leuchtmitteln und Filtern.

Der Kompensationsfilter F1 ist hierbei eine spezielle Lösung, bei der dessen Transmission $\tau_{KF}$ und die Transmission $\tau_{GK}$ der eingefärbten Glaskeramikkochfläche zu einem konstanten, wellenlängenunabhängigen Wert $\tau_E$ kompensieren (Gl. 10). Das Intensitätsspektrum $I_{LE}(\lambda)$ des Leuchtmittels wird dann um einen konstanten Wert $\tau_E$ zu dem auf der Anzeigeseite erscheinendem Intensitätsspektrum $I_A$ abgeschwächt (Gl. 11). Die Normlichtquelle E erreicht durch den Filter F1 allerdings nur einen Helligkeitswert von Y<1.

$$\text{Gl. 10} \qquad \tau_E = \tau_{KF}(\lambda) \cdot \tau_{GK}(\lambda) = \text{konst.}$$

$$\text{Gl. 11} \qquad i_{A0}(\lambda) = \tau_E \cdot i_{LE}(\lambda)$$

Farbfilterfolien müssen für diesen Einsatz als Kompensationsfilter ausreichend transparent und temperaturstabil sein. Der Kompensationsfilter F6 ist ein Beispiel eines kommerziell erhältlichen Farbfilters. Diese Folie CT113 Nr. 11383 der Fa. ASLAN zeigt mit einer Temperaturbeständigkeit bis 80°C hierzu sehr gute Ergebnisse. Folien der Firma Lee oder Q-Max haben eine erhöhte Temperaturbeständigkeit bis 185 °C und sind daher bevorzugt einsetzbar.

Erfindungsgemäß ist die Farbortkompensation nicht auf einen weißen Farbort beschränkt. Es kann jeder gewünschte Farbort mit einem entsprechenden Kompensationsfilter eingestellt werden, zum Beispiel Markengeräte-spezifische Farben für Anzeigen oder Firmenlogos, oder auch verschiedene Farborte zur benutzerfreundlichen Unterscheidung von Warnmeldungen, Hinweisen oder Benutzerhilfen, oder verschiedene Farborte für verschiedene Leistungsstufen bei Kochgeräten. Dies kann in vielfältigen Beispielen Anwendung finden, die zur leichteren Benutzerführung, Statusanzeigen oder verschiedenes Ambiente einer Schmuckbeleuchtung dienen.

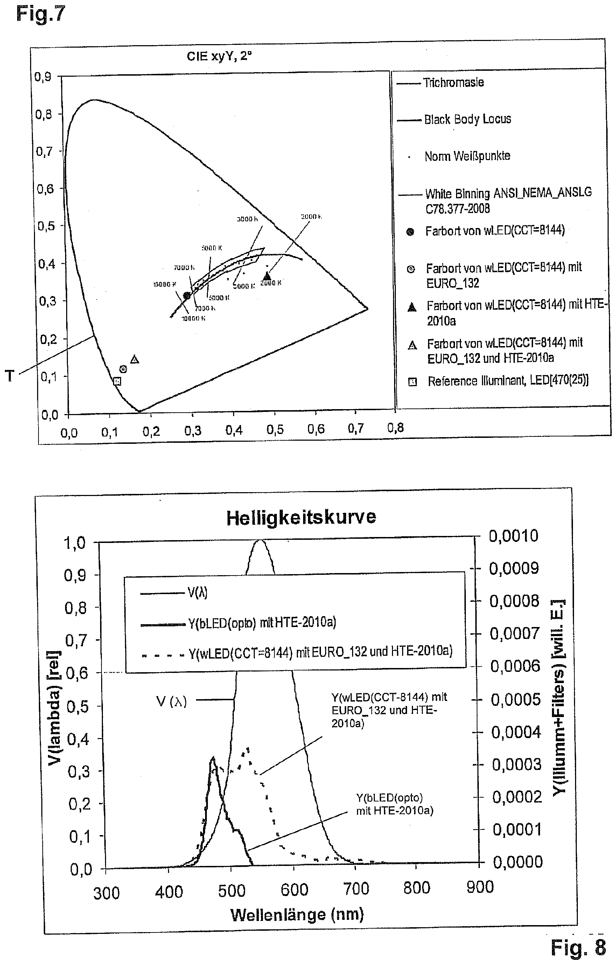

Weiterhin zeigt sich, dass kommerzielle farbige LEDs, insbesondere im blauen oder roten Farbspektrum, durch verschiedene eingefärbte Glaskeramiken oder andere eingefärbte transparente Materialien nur mit eingeschränkter Helligkeit sichtbar sind. Dies liegt daran, dass das menschliche Auge im blauen und roten Spektralbereich ein nur geringes Helligkeitsempfinden aufweist, im Gegensatz zum grünen Spektralbereich. Erfindungsgemäß kann beispielhaft eine blaue Anzeige auch mittels eines weißen Leuchtmittels, insbesondere einer weißen LED, und eines blauen Farbfilters erzeugt werden, die im Vergleich zu einer blauen LED zwar eine geringere Farbsättigung aufweist, aber vorteilhaft eine deutliche höher Helligkeit aufweist. Dies ist in Figur 7 in dem CIExyY-Diagramm (2° Beobachter) mit nach Gl.4 berechneten Farborten (x,y) verdeutlicht. Der Farbort einer blauen 470nm-LED (LED [470 (25)]) ist nahe der Trichromasiekurve T gelegen (graues Quadratsymbol, Farbsättigung=0,98). Der Farbort einer weißen Anzeige (CCT = 8144) (7-Segment LED, Fa. opto-devices, Typ OS39D3BWWA), schwarzer Kreis, und dieses weiße Licht durch eine CERAN HIGHTRANS® eco Probe, schwarzes Dreieckssymbol, sind ebenso dargestellt. Farborte nahe der Trichromasiekurve zeugen von einer hohen Farbsättigung, Farborte, die auf einer gedachten Linie hin zum Neutralpunkt (x=0,33, y=0,33) (Normlicht E - siehe Figur 2) liegen, weisen eine umso niedrigere Farbsättigung auf je näher sie zum Neutralpunkt liegen. Beispielhaft ist hier der Farbort dieser genannten weißen Anzeige versehen mit einem blauen Kompensationsfilter in Form einer blauen Farbkompensationsfolie (EURO-Filter Nr. 132, "medium blue") gezeigt, einmal der Farbort des Lichtes durch die Folie-132 (rundes graues Symbol) und der Farbort dieses weißen Lichtes durch die Folie und eine CERAN HIGHTRANS® eco Probe (graues Dreieckssymbol, Farbsättigung=0,72). Der resultierende Farbort durch die CERAN HIGHTRANS® eco Probe liegt nahezu auf einer gedachten Linie 470nm LED - Neutralpunkt (graues Quadratsymbol - Normlicht E) Alle Punkte auf dieser Linie haben den gleichen Farbton, wobei der Farbeindruck zum Neutralpunkt hin heller erscheint (Farbsättigung nimmt ab). Diese weiße Anzeige mit blauer Farbfolie erzeugt im Vergleich zur blauen LED Anzeige einen gleichen Farbton, allerdings mit einem helleren Farbeindruck durch CERAN HIGHTRANS® eco. Dieser Farbort besitzt etwa die gleiche Grenzwellenlänge wie die spektral reinere blaue LED nahe der Trichromasiekurve. Die höhere Helligkeit erklärt sich durch die zusätzlichen, insbesondere grünen Anteile im Emissionsspektrum, für die das menschliche Auge ein höheres Helligkeitsempfinden aufweist, im Vergleich zum nahezu monochromatisch blauen Emissionsspektrum einer blauen LED. Dies ist in Figur 8 anhand von Helligkeitsspektren verdeutlicht. Die Helligkeitsspektren sind die wellenlängenabhängige Funktion unter dem Integral in Gl.9, die Multiplikation der Transmissionsspektren, des Lichtspektrums und der V($\lambda$)-Kurve. Die V($\lambda$)-Kurve beschreibt das Helligkeitsempfinden des menschlichen Auges. Beispielhaft sind die Helligkeitsspektren der oben genannten blauen 470nm-LED und der weißen LED Anzeige mit blauer Kompensationsfolie (EURO-Filter Nr. 132), beide durch CERAN HIGHTRANS® eco betrachtet. Die Fläche unter den Kurven beschreibt die empfundene Helligkeit. Bei etwa gleicher Intensität im blauen Spektralbereich (470nm) weist das Spektrum der weißen Anzeige mit Blau-Filter (Filter, der aus dem Spektrum des sichtbaren Lichtes die blauen Lichtanteile herausfiltert) einen zusätzlichen Anteil im grünen (und roten) Spektralbereich auf, der den höheren Helligkeitseindruck erzeugt. Diese erfindungsgemäße Anwendung ist nicht auf den blauen Spektralbereich beschränkt. Es lassen sich mit diesem Verfahren bei allen Spektralfarben Anzeigen verwirklichen, die im Vergleich zu nahezu monochromatischen Anzeigen mit einfarbigen LEDs vorteilhaft heller erscheinen oder auch gewünschte Farborte erzeugen, die im Vergleich zu denen einfarbiger LEDs eine geringere Farbsättigung aufweisen und die Farbortverschiebung eines beispielhaft eingefärbten Glaskeramikkörpers korrigieren.

Im Rahmen der Erfindung ist auch eine Maskierung der Folien denkbar. Diese Maskierung erlaubt zudem eine scharfe Abgrenzung des Signalfeldes und Abschirmung von Streulicht, sowie eine Darstellung von Zeichen Symbolen oder Schriftzügen, die im Ein-Zustand der Beleuchtung für den Benutzer sichtbar sind und im Aus-Zustand vom Benutzer nicht wahrnehmbar sind. Selbst die Position dieser Markierungen/Logos ist im Aus-Zustand nicht erkennbar, wodurch die einfarbige edle Anmutung der Glaskeramikoberfläche für den Benutzer erhalten bleibt. Dieser Effekt wird als Deadfront-Effekt bezeichnet und von Designern oftmals gewünscht, da dadurch das Kochgerät in der Gesamtästhetik deutlich aufgewertet wird. Da die Maskierung direkt in der Folie erfolgt (beispielsweise durch eine zweite entsprechend bedruckte schwarze Folie) ist dieses System deutlich flexibler einsetzbar als beispielsweise eine direkt auf die Rückseite der Glaskeramikkochfläche aufgedruckte Maskierung.

Dieser Deadfront-Effekt ist bspw. bei den insbesondere in Japan bekannten transparenten Glaskeramikkochflächen nur mit erheblichem zusätzlichem Aufwand möglich. Aufgrund der hohen Transparenz dieser Kochflächen sind Display-Anzeigen oder Lämpchen direkt beziehungsweise deutlich sichtbar was teilweise als störend empfunden wird. Im Gegensatz zu diesen transparenten Kochflächen können die dunkel eingefärbten Kochflächen weiterhin auch mit leistungsstarken Strahlungsheizkörpern kombiniert werden, wodurch mit dem vorgeschlagenen Verfahren die Glaskeramikkochgeräte mit Strahlungsheizkörpern beziehungsweise Halogenheizkörpern in der Benutzerführung deutlich aufgewertet werden. Neben der hier vorgeschlagenen vorzugsweise einzusetzenden farbigen Folie einschließlich ggf. Maskierung ist auch eine aufgedruckte farbige Beschichtung auf der Unterseite der Kochfläche denkbar. Auch ein Ankleben der losen Folie an die Unterseite beziehungsweise ein Ankleben einer maskierten Folie an die Glaskeramikunterseite ist denkbar. Durch die scharfe Abgrenzung mittels Maskierung ist auch die Abbildungsschärfe auf der Oberseite von feinen Linien und Schriftzügen bei Einsatz der üblicherweise auf der Unterseite genoppten Glaskeramikkochflächen ohne optisch störende Verzerrungen möglich. Dies ist ein weiterer deutlicher Vorteil gegenüber der bekannten aufgedruckten Maskierung auf einer genoppten Unterseite. Durch die direkte Bedruckung der genoppten Unterseite kommt es zu stark störenden Verzerrungen, wodurch nur sehr große grobe Fenster und Symbole dargestellt werden können. Die Kochflächendicke beträgt üblicherweise 4 mm, in kommerziellen Anwendungen auch bis zu 6mm. Zur Erhöhung der Farbintensität beziehungsweise Leuchtstärke ist es auch vorstellbar, Kochflächen mit einer reduzierten Dicke von beispielsweise 3 mm einzusetzen.

Neben den hier aufgezeigten Hauptanwendungsfeld für Beleuchtungen mit Einzel-LEDs oder 7-Segmentanzeigen ist dieses System selbstverständlich auch für jede beliebige andere Lichtquelle und Darstellungsform geeignet, es können beispielsweise als Lichtquelle auch Halogenlampen, Leuchtstäbe, Faseroptiken oder Leuchtstoffröhren eingesetzt werden. Neben Leuchtpunkten oder 7-Segment-Anzeigen sind auch Balkenanzeigen oder Leuchtkennzeichnungen zur Kochzonenidentifizierung oder Markierung vorstellbar oder Ausleuchtung von größeren Kochzonenflächen oder Umrandungen. Weiterhin sind erfindungsgemäße Farbortkompensationen oder Verschiebungen auch für Hintergrundbeleuchtungen von alphanumerischen oder graphischen Displays, beispielhaft LCD-Anzeigen, anwendbar. Neben den bevorzugten Einsatz in Glaskeramikkochgeräten kann dieses System auch im Panelbereich von Backöfen oder Dominokochgeräten einschließlich Grillplatten eingesetzt werden. Bekannt sind beispielsweise auch Kaminverkleidungen aus Glaskeramik. Auch bei diesen Kaminverkleidungen ist eine Beleuchtung mit dem vorgeschlagenen System zur Verbesserung des Benutzerkomforts möglich. Die Kochfläche kann plan, gebogen oder komplex verformt ausgebildet sein. Als Beheizung für die Kochstellen sind Gasbrenner, Induktionsspulen oder Strahlungsheizkörper beziehungsweise Halogenheizkörper vorstellbar.

**Patentansprüche**

1. Anzeigevorrichtung, insbesondere für Kochflächen, mit einem Glaskeramikkörper, insbesondere einer Glaskeramikscheibe, der eine Glaskeramikvorderseite und eine -rückseite bildet, und einem im Bereich der Glaskeramikrückseite angeordneten Leuchtmittel,
wobei die mittlere Transmission des Glaskeramikkörpers > 0,2 % jeweils für jeden der Spektralbereiche von 420-500 nm, 500-620 nm und 550-640 nm beträgt, und
wobei die maximale Transmission des Glaskeramikkörpers < 40 % im Spektralbereich von 400 bis 700 nm beträgt, **dadurch gekennzeichnet,**
**dass** die Transmission des Glaskeramikkörpers im Mittel < 4 % im Spektralbereich von 450 bis 600 nm beträgt,
**dass** zwischen der Glaskeramikvorderseite und dem Leuchtmittel ein optischer Kompensationsfilter angeordnet ist, und
**dass** das Leuchtmittel weißes Licht emittiert und der Kompensationsfilter derart gestaltet ist, dass auf der Glaskeramik-Vorderseite farbiges Licht mit einer Farbsättigung zwischen 0,99 und 0,5 emittiert wird.

**2.** Anzeigevorrichtung nach Anspruch 1,
**dadurch gekennzeichnet,**
**dass** die mittlere Transmission des Glaskeramikkörpers > 0,4 % jeweils für jeden der Spektralbereiche von 420-500 nm, 500-620 nm und 550-640 nm beträgt.

**3.** Anzeigevorrichtung nach einem der Ansprüche 1 oder 2,
**dadurch gekennzeichnet,**
**dass** die maximale Transmission des Glaskeramikkörpers < 25 % im Spektralbereich von 400 bis 700 nm und im Mittel < 4 % im Spektralbereich von 450 bis 600 nm beträgt oder
**dass** die maximale Transmission des Glaskeramikkörpers < 40 %, vorzugsweise < 25 % im Spektralbereich von 400 bis 750 nm und < 4 % im Spektralbereich von 450 bis 600 nm beträgt.

**4.** Anzeigevorrichtung nach einem der Ansprüche 1 bis 3,
**dadurch gekennzeichnet,**
**dass** der Glaskeramikkörper den Farbort des genormten Leuchtmittels (E) bei Durchtritt (Transmission) durch denselben im CIE-Normenvalenzsystem CIExyY (CIE: Commision Internationale de l'Eclaireage, 1931, 2° Beobachter) auf oder innerhalb der Grenzkurve (G1) erscheinen lässt, die durch folgende Koordinaten bestimmt ist:

| Grenzkurve G1 | |
|---|---|
| x | y |
| 0,71 | 0,27 |
| 0,17 | 0,02 |
| 0,12 | 0,08 |
| 0,05 | 0,30 |
| 0,01 | 0,60 |
| 0,08 | 0,81 |
| 0,28 | 0,70 |
| 0,71 | 0,27 |

**5.** Anzeigevorrichtung nach Anspruch 4,
**dadurch gekennzeichnet, dass** der Glaskeramikkörper den Farbort des genormten Leuchtmittels (E) bei Durchtritt (Transmission) durch denselben im CIE-Normenvalenzsystem CIExyY (CIE: Commision Internationale de l'Eclaireage, 1931, 2° Beobachter) auf oder innerhalb der Grenzkurve (G2) erscheinen lässt, die durch folgende Koordinaten bestimmt ist:

| Grenzkurve G2 | |
|---|---|
| x | y |
| 0,64 | 0,28 |
| 0,20 | 0,07 |
| 0,17 | 0,09 |
| 0,10 | 0,30 |
| 0,08 | 0,56 |
| 0,12 | 0,70 |
| 0,26 | 0,65 |
| 0,64 | 0,28 |

**6.** Anzeigevorrichtung nach einem der Ansprüche 1 bis 5,
**dadurch gekennzeichnet,**
**dass** auf der von der Glaskeramikvorderseite gebildeten Anzeigenseite eine Lichterscheinung erzeugbar ist, deren Farbort verschieden zum ursprünglichen Farbort des Leuchtmittels ist,
oder dass auf der von der Glaskeramikvorderseite gebildeten Anzeigenseite eine Lichterscheinung erzeugbar ist, deren Farbort zum gleichen, ursprünglichen Farbort des Leuchtmittels kompensiert ist.

**7.** Anzeigevorrichtung nach einem der Ansprüche 1 bis 6,
**dadurch gekennzeichnet,**
**dass** das Leuchtmittel von einer Kombination zumindest jeweils einer blauen, grünen und roten LED (RGB-Leuchtmittel) gebildet ist,
oder dass das Leuchtmittel eine spektral breite Leuchterscheinung emittiert, bspw. als weiße LED oder Leuchtstoffröhre, ausgebildet ist.

**8.** Anzeigevorrichtung nach einem der Ansprüche 1 bis 7,
**dadurch gekennzeichnet,**
**dass** der Kompensationsfilter für transmittierendes Normlicht (E) im CIExyY-System (1931, 2° Beobachter) einen Helligkeitswert von Y>10, vorzugsweise Y>40 aufweist.

**9.** Anzeigevorrichtung nach einem der Ansprüche 1 bis 8,
**dadurch gekennzeichnet,**
**dass** der Kompensationsfilter von einer Farbfilterfolie gebildet ist.

**10.** Anzeigevorrichtung nach Anspruch 9,
**dadurch gekennzeichnet,**
**dass** die Farbfilterfolie eine Temperaturbeständigkeit im Bereich $\leq$ 80°C, vorzugsweise $\leq$ 150°C aufweist.

**11.** Anzeigevorrichtung nach Anspruch 9 oder 10,
**dadurch gekennzeichnet,**
**dass** die Farbfilterfolie eine Maskierung aufweist.

**12.** Anzeigevorrichtung nach einem der Ansprüche 1 bis 8,
**dadurch gekennzeichnet,**
**dass** der Kompensationsfilter auf den Glaskeramikkörper aufgedruckt ist.

**13.** Anzeigevorrichtung nach einem der Ansprüche 1 bis 12,
**dadurch gekennzeichnet,**
**dass** der als Glaskeramikscheibe ausgebildete Glaskeramikkörper eine Dicke im Bereich zwischen 3-6 mm aufweist.

**Claims**

**1.** A display device, in particular for cooktops, comprising a glass ceramic body, in particular a glass ceramic pane, which forms a glass ceramic front side and a glass ceramic rear side, and a light source arranged in the region of the glass ceramic rear side,
wherein the average transmission of the glass ceramic body is > 0.2 % in each case for each of the spectral ranges of 420-500 nm, 500-620 nm and 550-640 nm, and wherein the maximum transmission of the glass ceramic body is < 40 % in the spectral range of 400 to 700 nm,
**characterised in that**
the transmission of the glass ceramic body is on average < 4 % in the spectral range of 450 to 600 nm,
an optical compensation filter is arranged between the glass ceramic front side and the light source, and
the light source emits white light and the compensation filter is designed in such a way that coloured light with a colour saturation between 0.99 and 0.5 is emitted on the glass ceramic front side.

**2.** The display device according to claim 1,
**characterised in that**
the average transmission of the glass ceramic body is > 0.4 % in each case for each of the spectral ranges of 420-500 nm, 500-620 nm and 550-640 nm.

**3.** The display device according to any one of claims 1 or 2,
**characterised in that**
the maximum transmission of the glass ceramic body is < 25 % in the spectral range of 400 to 700 nm and on average < 4 % in the spectral range of 450 to 600 nm or
the maximum transmission of the glass ceramic body is < 40 %, preferably < 25 %, in the spectral range of 400 to 750 nm and < 4 % in the spectral range of 450 to 600 nm.

**4.** The display device according to any one of claims 1 to 3,
**characterised in that**
the glass ceramic body causes the chromaticity coordinate of the standardised light source (E) to appear on or within the limit curve (G1), which is determined by the following coordinates, during its passage (transmission) through the same in the CIE standard colorimetric system CIExyY (CIE: Commision Internationale de l'Eclaireage, 1931, 2° observer):

| Limit curve G1 | |
|---|---|
| x | y |
| 0.71 | 0.27 |
| 0.17 | 0.02 |
| 0.12 | 0.08 |
| 0.05 | 0.30 |
| 0.01 | 0.60 |
| 0.08 | 0.81 |
| 0.28 | 0.70 |
| 0.71 | 0.27 |

**5.** The display device according to claim 4,
**characterised in that** the glass ceramic body causes the chromaticity coordinate of the standardised light source (E) to appear on or within the limit curve (G2), which is determined by the following coordinates, during its passage (transmission) through the same in the CIE standard colorimetric system CIExyY (CIE: Commision Internationale de l'Eclaireage, 1931, 2° observer):

| Limit curve G2 | |
|---|---|
| x | y |
| 0.64 | 0.28 |
| 0.20 | 0.07 |
| 0.17 | 0.09 |
| 0.10 | 0.30 |
| 0.08 | 0.56 |
| 0.12 | 0.70 |
| 0.26 | 0.65 |
| 0.64 | 0.28 |

**6.** The display device according to any one of claims 1 to 5,
**characterised in that**
a light phenomenon having a chromaticity coordinate which is different from the original chromaticity coordinate of the light source can be produced on the display side formed by the glass ceramic front side

or **in that** a light phenomenon having a chromaticity coordinate which is compensated to assume the same, original chromaticity coordinate of the light source can be produced on the display side formed by the glass ceramic front side.

7. The display device according to any one of claims 1 to 6,
**characterised in that**
the light source is formed from a combination of at least one of each of a blue, green and red LED (RGB light source), or **in that** the light source emits a spectrally broad light phenomenon or is configured as a white LED or fluorescent tube.

8. The display device according to any one of claims 1 to 7,
**characterised in that**
the compensation filter for transmissive standard light (E) in the CIExyY system (1931, 2° observer) has a brightness value of Y > 10, preferably Y > 40.

9. The display device according to any one of claims 1 to 8,
**characterised in that**
the compensation filter is formed by a colour filter film.

10. The display device according to claim 9,
**characterised in that**
the colour filter film has a thermal stability in the range of ≤ 80 °C, preferably ≤ 150 °C.

11. The display device according to claim 9 or 10,
**characterised in that**
the colour filter film has a masking.

12. The display device according to any one of claims 1 to 8,
**characterised in that**
the compensation filter is printed on the glass ceramic body.

13. The display device according to any one of claims 1 to 12,
**characterised in that**
the glass ceramic body configured as a glass ceramic pane has a thickness in the range of between 3 and 6 mm.

**Revendications**

1. Dispositif d'affichage, en particulier pour surfaces de cuisson, comprenant un corps en vitrocéramique, en particulier une vitre en vitrocéramique, qui forme une face avant et une face arrière en vitrocéramique, et une source lumineuse disposée dans la zone de la face arrière en vitrocéramique,
la transmission moyenne du corps en vitrocéramique étant > 0,2 % pour chacune des gammes spectrales de 420 à 500 nm, de 500 à 620 nm et de 550 à 640 nm, et
la transmission maximale du corps en vitrocéramique étant < 40 % dans la gamme spectrale de 400 à 700 nm,
**caractérisé en ce**
**que** la transmission du corps en vitrocéramique est en moyenne < 4 % dans la gamme spectrale de 450 à 600 nm,
**qu'**un filtre de compensation optique est disposé entre la face avant en vitrocéramique et la source lumineuse, et en ce
**que** la source lumineuse émet une lumière blanche et le filtre de compensation est conçu de telle sorte qu'une lumière colorée avec une saturation de couleur entre 0,99 et 0,5 est émise sur la face avant en vitrocéramique.

2. Dispositif d'affichage selon la revendication 1,
**caractérisé en ce**
**que** la transmission moyenne du corps en vitrocéramique est > 0,4 % pour chacune des gammes spectrales de 420 à 500 nm, de 500 à 620 nm et de 550 à 640 nm.

3. Dispositif d'affichage selon l'une quelconque des revendications 1 ou 2,
**caractérisé en ce**
**que** la transmission maximale du corps en vitrocéramique est < 25 % dans la gamme spectrale de 400 à 700 nm et en moyenne < 4 % dans la gamme spectrale de 450 à 600 nm ou en ce

**que** la transmission maximale du corps en vitrocéramique est < 40 %, de préférence < 25 % dans la gamme spectrale de 400 à 750 nm et < 4 % dans la gamme spectrale de 450 à 600 nm.

4. Dispositif d'affichage selon l'une quelconque des revendications 1 à 3,
   **caractérisé en ce**
   **que** le corps en vitrocéramique affiche une teinte de la source lumineuse normalisée (E) lors de son passage (transmission) dans celui-ci, dans le système de valence standard CIE CIExyY (CIE : Commission Internationale de l'Éclairage, 1931, 2 ° observateur), sur ou dans la courbe limite (G1), qui est déterminée par les coordonnées suivantes :

| Courbe limite G1 | |
|---|---|
| x | y |
| 0,71 | 0,27 |
| 0,17 | 0,02 |
| 0,12 | 0,08 |
| 0,05 | 0,30 |
| 0,01 | 0,60 |
| 0,08 | 0,81 |
| 0,28 | 0,70 |
| 0,71 | 0,27 |

5. Dispositif d'affichage selon la revendication 4,
   **caractérisé en ce que** le corps en vitrocéramique affiche la teinte de la source lumineuse normalisée (E) lors de son passage (transmission) dans celui-ci, dans le système de valence standard CIE CIExyY (CIE : Commission Internationale de l'Éclairage, 1931, 2 ° observateur), sur ou dans la courbe limite (G2), qui est déterminée par les coordonnées suivantes :

| Courbe limite G2 | |
|---|---|
| x | y |
| 0,64 | 0,28 |
| 0,20 | 0,07 |
| 0,17 | 0,09 |
| 0,10 | 0,30 |
| 0,08 | 0,56 |
| 0,12 | 0,70 |
| 0,26 | 0,65 |
| 0,64 | 0,28 |

6. Dispositif d'affichage selon l'une quelconque des revendications 1 à 5,
   **caractérisé en ce**
   **qu'**un phénomène d'éclairage peut être généré du côté de l'affichage formé par la face avant en vitrocéramique, dont la teinte est différente de la teinte d'origine de la source lumineuse,
   ou en ce qu'un phénomène d'éclairage peut être généré sur le côté d'affichage formé par la face avant en vitrocéramique, dont la teinte est compensée pour la même teinte initiale de la source lumineuse.

7. Dispositif d'affichage selon l'une quelconque des revendications 1 à 6,

**caractérisé en ce**
**que** la source lumineuse est formée par une combinaison d'au moins une LED bleue, verte et rouge respectivement (source lumineuse RGB),
ou en ce que la source lumineuse émet un phénomène d'éclairage spectralement large, par exemple sous la forme d'une LED blanche ou d'un tube fluorescent.

8. Dispositif d'affichage selon l'une quelconque des revendications 1 à 7,
   **caractérisé en ce**
   **que** le filtre de compensation pour la lumière standard (E) transmise dans le système CIExyY (1931, 2 ° observateur) a une valeur de luminosité de Y > 10, de préférence Y > 40.

9. Dispositif d'affichage selon l'une quelconque des revendications 1 à 8,
   **caractérisé en ce**
   **que** le filtre de compensation est formé par une pellicule couleur.

10. Dispositif d'affichage selon la revendication 9,
    **caractérisé en ce**
    **que** la pellicule couleur a une résistance à la température dans la plage $\leq$ 80 °C, de préférence $\leq$ 150 °C.

11. Dispositif d'affichage selon la revendication 9 ou 10,
    **caractérisé en ce**
    **que** la pellicule couleur a un masque.

12. Dispositif d'affichage selon l'une quelconque des revendications 1 à 8,
    **caractérisé en ce**
    **que** le filtre de compensation est imprimé sur le corps en vitrocéramique.

13. Dispositif d'affichage selon l'une quelconque des revendications 1 à 12,
    **caractérisé en ce**
    **que** le corps en vitrocéramique conçu comme une vitre en vitrocéramique présente une épaisseur comprise entre 3 et 6 mm.

| W1 | | W2 | |
|---|---|---|---|
| x | y | x | y |
| 0,3 | 0,25 | 0,3068 | 0,3113 |
| 0,26 | 0,32 | 0,3028 | 0,3304 |
| 0,37 | 0,43 | 0,3205 | 0,3481 |
| 0,51 | 0,48 | 0,3207 | 0,3462 |
| 0,48 | 0,35 | 0,3376 | 0,3616 |
| 0,35 | 0,3 | 0,3551 | 0,376 |
| | | 0,3548 | 0,3736 |
| | | 0,3736 | 0,3874 |
| | | 0,4006 | 0,4044 |
| | | 0,3996 | 0,4015 |
| | | 0,4299 | 0,4165 |
| | | 0,4562 | 0,426 |
| | | 0,4813 | 0,4319 |
| | | 0,4593 | 0,3944 |
| | | 0,4147 | 0,3814 |
| | | 0,3889 | 0,369 |
| | | 0,3898 | 0,3716 |
| | | 0,367 | 0,3578 |
| | | 0,3512 | 0,3465 |
| | | 0,3515 | 0,3487 |
| | | 0,3366 | 0,3369 |
| | | 0,3222 | 0,3243 |
| | | 0,3221 | 0,3261 |

**Tabelle 1**

| Grenzkurve G1 | | Grenzkurve G2 | |
|---|---|---|---|
| x | y | x | y |
| 0,71 | 0,27 | 0,64 | 0,28 |
| 0,17 | 0,02 | 0,20 | 0,07 |
| 0,12 | 0,08 | 0,17 | 0,09 |
| 0,05 | 0,30 | 0,10 | 0,30 |
| 0,01 | 0,60 | 0,08 | 0,56 |
| 0,08 | 0,81 | 0,12 | 0,70 |
| 0,28 | 0,70 | 0,26 | 0,65 |
| 0,71 | 0,27 | 0,64 | 0,28 |

**Tabelle 2**

14

Fig. 1

Fig. 2

**CIE xyY, 2° Observer**
**Farborte der Normbeleuchtung E durch Glaskeramik Typ D**
**und Glaskeramik Typ D mit Kompensationsfiltern**

Fig. 3

**CIE xyY, 2° Observer**
**LED-RGB-Farborte Glaskeramik Typ D**
**und Glaskeramik Typ D mit Kompensationsfilter F5**

Fig. 4

**Fig. 5**

**Fig. 6**

## Fig.7

CIE xyY, 2°

— Trichromasie

— Black Body Locus

· Norm Weißpunkte

— White Binning ANSI_NEMA_ANSLG C78.377-2008

● Farbort von wLED(CCT=8144)

◉ Farbort von wLED(CCT=8144) mit EURO_132

▲ Farbort von wLED(CCT=8144) mit HTE-2010a

△ Farbort von wLED(CCT=8144) mit EURO_132 und HTE-2010a

▣ Reference Illuminant, LED[470(25)]

**Helligkeitskurve**

— V(λ)

— Y(bLED(opto) mit HTE-2010a)

- - - Y(wLED(CCT=8144) mit EURO_132 und HTE-2010a)

V (λ)

Y(wLED(CCT-8144) mit EURO_132 und HTE-2010a)

Y(bLED(opto) mit HTE-2010a)

V(lambda) [rel]

Y(Illumm+Filters) [will. E.]

Wellenlänge (nm)

**Fig. 8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008050263
- EP 2223900 A

- US 2007108184 A